# EUROPEAN PATENT SPECIFICATION

(11) **EP 1 006 529 B1**
(45) Date of publication and mention of the grant of the patent: **17.03.2004**
(21) Application number: 99500193.0
(22) Date of filing: 22.10.1999
(51) Int. Cl.: G11B 23/38, G11B 23/40, G11B 25/04, G11B 17/04, G06K 7/10, G06K 19/06, G11B 33/04, G11B 23/03

(54) **Improved bar-code and bar-code reading device**
Verbesserter Barcode und Barcodelesegerät
Code à barres amélioré et appareil de lecture de code à barres

(30) Priority: 26.10.1998 ES 9802689 U
(43) Date of publication of application: 07.06.2000
(73) Proprietor: 2B Fantastic, S.L., 08022 Barcelona (ES)
(72) Inventor: 2B Fantastic, S.L., 08022 Barcelona (ES)
(74) Representative: Flaccus, Rolf-Dieter, Dr.

(56) References cited:
- EP-A- 0 538 488
- US-A- 4 677 604
- US-A- 5 319 184
- US-A- 5 729 464
- PATENT ABSTRACTS OF JAPAN vol. 1995, no. 10, 30 November 1995 (1995-11-30) & JP 07 182659 A (SONY CORP), 21 July 1995 (1995-07-21)

## Description

### OBJECT OF THE INVENTION

The object of the present Patent application is an improved bar-code and bar-code reading device which, in addition to the function for which it was designed, contributes a number of advantages that shall be set out hereinafter, besides others inherent in the arrangement and construction thereof.

More specifically, the invention has devised a concentric bar-code, especially designed to identify audio-visual CD or DVD products and a device for reading the bar-code, which is characterised by its remarkable constructional and operational simplicity.

### BACKGROUND OF THE INVENTION

Reference should at present be made with respect to the prior art to known bar-codes in which the successive bars take up a linear or parallel arrangement between each other on the product to be identified, the bar-codes being read by a reading element which passes linearly and transversely over those bars.

These bar-codes are extensively used nowadays in manifold and different types of products, such as pharmaceutical products, books, etc.

However, when a bar-code is to be applied to a product such as known audio-visual CD or DVD products, the only available space is a small-sized circular space defined about the central opening of this kind of products, wherefore the usual line bar-codes are ineffective due to a lack of space.

U.S. Patent 5,729,464 discloses an automated storage library for storage media such as optical disks. The automatic storage library is provided with one or more stationary bar code readers for reading bar code labels affixed to the surface of an optical disk. The label is a concentric bar code which is read from the outer diameter of the disk to the center regardless of the rotational orientation of the label with respect to the stationary reader. The concentric bar code label is affixed to the top surface of the optical disk, the data being recorded on the bottom surface.
The library system comprises magazines which are provided with means which allow a sliding movement of trays inserted therein, each tray supporting an optical disk. The bar code reader is affixed to the top center of a column of magazine mounts containing the magazines. The circular bar code label is read when a disk is removed from or inserted into a magazine.

JP 07 182659 A discloses an optical disk drive apparatus capable of reading a bar code on an optical disc. The bar code is formed at the inner periphery of the recording area of the disk and is read while the disk is rotated on a disk table. The apparatus comprises a bar code-reading device which is separately provided from an optical pickup.

The improved bar-code and bar-code reading device in accordance with the present invention fully overcome the aforementioned drawbacks.

In accordance with claim 1, the present invention pertains to a Data storage disk having a circular, concentric bar code arranged about the spin axis of said disk. The bar code is designed such that it can be read by a bar code reader crossing the bar code diametrically,
The diameter of said concentric bar code is smaller than the diameter of said disk, and the bar code is arranged in the circular area of the disk which is defined around the central opening of the disk and which is not used for data recording.
Thus, the bar-code takes up very little space and it can easily be read using the device described hereinafter.

In addition, the present invention concerns a device for reading and identifying the concentric bar codes in accordance with claim 1, said device comprising a bar code reader which reads said circular bar-code along its diameter during said sliding movement of the disk, thus identifying the data storage disk on which said bar code is provided. The reading device is characterized in that
- it is provided with means which allow a sliding movement of said disk, and
- it comprises a deck provided with lateral tracks which are arranged such that said data storage disk can slide between said tracks; and
- said reader comprises a base and a column projecting from said base, wherein the top of said column ends in said deck; and
- said column axially houses a reading element, the end of which projects onto the plane of said deck; wherein said reading element is arranged such that it passes over the diameter of the concentric bar code when said disk slides lengthwise on said deck between said tracks.

Said device consists of a support comprising a base from which a column projects, ending at the top in a deck provided with side tracks through which a product such as a CD can slide lengthways, whereas said column axially houses within it an optical element the end of which projects onto the longitudinal axis of said deck, and therefore when the CD is slid along the deck with the bar-code lying on the deck, the optical element diametrically crosses the concentric bar-code, reading it and identifying said product.

In order to complete the description made hereinafter and for an easier understanding of its characteristics, attached to this specification is a set of drawings whose figures show the most significant details of the invention for illustrative and non-limiting purposes.

### BRIEF DESCRIPTION OF THE DRAWINGS

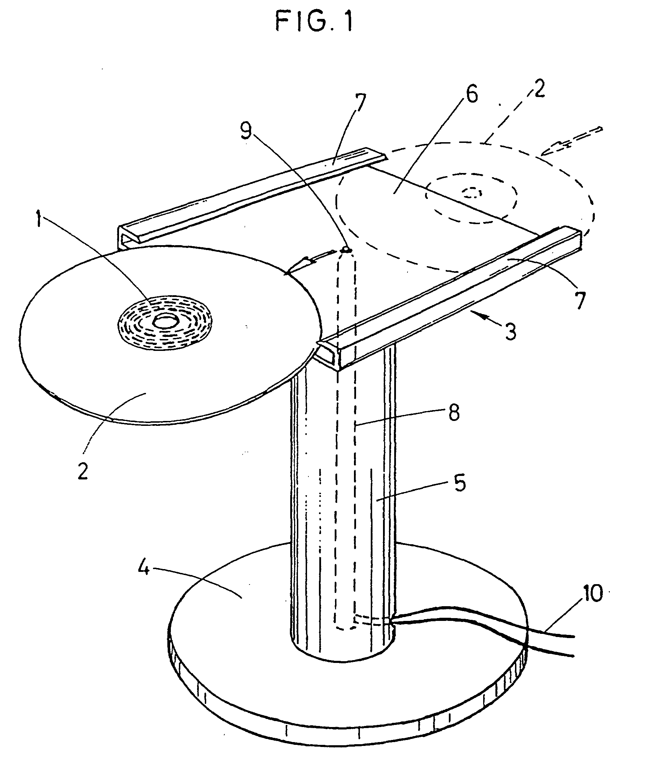

Figure 1 is a perspective view of a practical embodiment of the invention.

### DESCRIPTION OF A PREFERRED EMBODIMENT

With reference to the above figures and in accordance with the references numerals used, the same are seen to show an embodiment of the invention, consisting of arranging a concentric bar-code -1- about the spin axis of a product, such as a CD -2- for instance, which shall be read and subsequently identified by means of a reading device -3-, comprising a base -4- from which a column -5- projects, ending at the top in a deck -6- provided with side tracks -7- compatible with a sliding CD -2-, whereas the column -5- axially houses a reading element -8-the end -9- of which projects onto the longitudinal axis of said deck -6-.

In short, the aim is to slide the CD -2- lengthways along the deck - 6- between the tracks -7-, with the concentric bar-code lying facing said deck, in order for the end -9- of the reader -8- to diametrically cross it, reading the code and identifying the product on which the code is provided.

Now, obviously, the support -3- is suitably designed and has a housing for the reading element -8- and its appropriate lead -10-connecting it to the mains.

Now, therefore, the invention facilitates the arrangement of bar-codes in small spaces in which a conventional linear bar-code cannot be applied, and in turn allows the bar-code to be read and identified by means of a simple device which readily and swiftly identifies the bar-code.

## Claims

1. Data storage disk (2) having a circular, concentric bar code (1) arranged about the spin axis of said disk, said bar code being designed such that it can be read by a bar code reader crossing the bar code diametrically,
**characterized in that** the diameter of said concentric bar code (1) is smaller than the diameter of said disk (2) and the bar code (1) is arranged in the circular area of the disk (2) which is defined around the central opening of the disk (2) and which is not used for data recording.

2. Data storage disk in accordance with claim 1, **characterized in that** said disk (2) is a CD or DVD product.

3. Device for reading and identifying concentric bar codes on data storage disks in accordance with claim 1 or 2, said device comprising a bar code reader (3) which reads said circular bar-code (1) along its diameter during a sliding movement of the disk (2), thus identifying the data storage disk (2) on which said bar code (1) is provided, said d vice being further provided with means (7) which allow said sliding movement of said disk (2),
**characterized in that**
- the device comprises a deck (6) provided with lateral tracks (7) which are arranged such that said data storage disk (2) can slide between said tracks (7); and
- said reader comprises a base (4) and a column (5) projecting from said base, wherein the top of said column ends in said deck (6); and
- said column axially houses a reading element (8), the end of which projects onto the plane of said deck (6); wherein said reading element (8) is arranged such that it passes over the diameter of the concentric bar code (1) when said disk slides lengthwise on said deck (6) between said tracks (7).

## Patentansprüche

1. Datenspeicherplatte (2) mit einem kreisrunden, konzentrischen Strichcode (1), der um die Drehachse der Platte herum angeordnet ist, wobei der Strichcode so konstruiert ist, dass er von einem Strichcodelesegerät, welches den Strichcode diametral überquert, gelesen werden kann, **dadurch gekennzeichnet, dass** der Durchmesser des konzentrischen Strichcodes (1) kleiner ist als der Durchmesser der Platte (2) und der Strichcode (1) in der kreisrunden Fläche der Scheibe (2) angeordnet ist, welche um die mittige Öffnung der Platte (2) definiert ist und nicht für die Datenspeicherung verwendet wird.

2. Datenspeicherplatte entsprechend Anspruch 1, **dadurch gekennzeichnet, dass** die Platte (2) ein CD- oder DVD-Erzeugnis ist.

3. Vorrichtung zum Lesen und Identifizieren von konzentrischen Strichcodes auf Datenspeicherplatten gemäß Anspruch 1 oder 2, wobei die Vorrichtung ein Strichcodelesegerät (3) umfasst, welches während einer Gleitbewegung der Platte (2) den kreisrunden Strichcode (1) entlang dessen Durchmesser liest, wodurch die Datenspeicherplatte (2), auf welcher der Strichcode (1) vorgesehen ist, identifiziert wird, wobei die Vorrichtung weiterhin mit Mitteln (7) versehen ist, welche die besagte Gleitbewegung der Scheibe (2) ermöglichen, **dadurch gekennzeichnet, dass**
- die Vorrichtung ein Deck (6) umfasst, welches mit seitlichen Führungen (7) versehen ist, die so angeordnet sind, dass die Datenspeicherplatte (2) zwischen diesen Führungen (7) gleiten kann; und
- das Lesegerät eine Basis (4) und eine auf dieser aufragende Säule (5) umfasst, wobei die Oberseite der Säule in dem besagten Deck (6) endet; und
- die Säule ein in axialer Richtung angeordnetes Leseelement (8) aufweist, das sich mit seinem Ende auf die Ebene des Decks (6) erstreckt, ;
wobei das Leseelement (8) so angeordnet ist, dass es den Durchmesser des konzentrischen Strichcodes (1) überstreicht, wenn die Platte auf dem Deck (6) in Längsrichtung zwischen den Führungen (7) gleitet.

## Revendications

1. Disque (2) de stockage de données qui présente un code à barres (1) circulaire agencé concentriquement par rapport à l'axe de rotation dudit disque, ledit code à barres étant conçu de manière à pouvoir être lu par un lecteur de code à barres qui balaie diamétralement le code à barres,
**caractérisé en ce que** le diamètre dudit code à barres (1) concentrique est plus petit que le diamètre dudit disque (2) et **en ce que** le code à barres (1) est agencé dans la zone circulaire du disque (2) qui est définie autour de l'ouverture centrale du disque (2) et qui n'est pas utilisée pour l'enregistrement de données.

2. Disque de stockage de données selon la revendication 1, **caractérisé en ce que** ledit disque (2) est un produit de type CD ou DVD.

3. Dispositif pour lire et identifier des codes à barres disposés sur des disques de stockage de données selon les revendications 1 ou 2, ledit dispositif comprenant un lecteur (3) de code à barres qui lit ledit code à barres (1) circulaire suivant son diamètre pendant un déplacement de coulissement du disque (2) pour ainsi identifier le disque (2) de stockage de données qui est doté dudit code à barres (1), ledit dispositif étant en outre doté de moyens (7) qui permettent un déplacement de coulissement dudit disque (2)
**caractérisé en ce que**
- le dispositif comprend un couvercle (6) doté de pistes latérales (7) agencées de telle sorte que le disque (2) de stockage de données puisse coulisser le long desdites pistes (7) ; et
- ledit lecteur comprend une base (4) et une colonne (5) qui déborde de ladite base, dans lequel le sommet de ladite colonne se termine dans ledit couvercle (6) ; et
- ladite colonne loge axialement un élément de lecture (8) dont l'extrémité déborde dans le plan dudit couvercle (6) ;
dans laquelle ledit élément de lecture (8) est agencé de manière à balayer le diamètre du code à barres (1) concentrique lorsque ledit disque coulisse suivant sa longueur sur ledit couvercle et entre lesdites pistes (7).
